# EUROPEAN PATENT APPLICATION

(11) **EP 1 376 799 A1**
(43) Date of publication of application: **02.01.2004**
(21) Application number: 02386014.1
(22) Date of filing: 21.10.2002
(51) Int. Cl.: H02G 3/08

(54) **Waterproof external connection boxes**

(30) Priority: 28.06.2002 GR 2002100314
(71) Applicant: Palaiohorinos, Ioannis, Vipeth Thessaloniki (GR)
(72) Inventor: Palaiohorinos, Ioannis, Vipeth Thessaloniki (GR)

(57) **Abstract**

It is a series of external waterproof boxes used for the connection of electrical cables.

These boxes are constructed with incorporated glands providing maximum waterproof ability in their use.

## Description

This invention refers to the construction of a waterproof external box used for the connection of electrical cables.

There are different types of boxes. My boxes are a special type.

The boxes found in the market nowadays have the following disadvantages:
- They have holes covered by small rubber pieces which are removed for the entering of gland.

Placing a gland of automatic pressing of cable the construction is not waterproof because there are gaps in the nut.

The present boxes of small distances have no nuts on the cover but they are simply adjusted, which causes problems in the constructions, where they will be used, because they can be removed easily and can be lost but it is even easier for the water to enter the construction (if it can not be adjusted properly).
- For the screwing of this box e.g. to a metallic construction we screw it in the internal part of this box (down side) and this is a problem because a cable may contact the screws making this construction dangerous.

In contrast our box has the following advantages:
- There are incorporated glands in the construction of this box.

With the incorporation of these glands we avoid the connection of nuts and the creation of gaps in the above places (absolute waterproof).
- My boxes have screws on the cover, which leads to a great waterproof ability of the construction
- Our boxes are screwed in a metallic construction out of the central place of the box having two obvious juts out of the box.
- My box has the formation of a ring externally creating the base of the gland for even better waterproof ability.
- In the conical entrance of the gland there is an external elastic waterproof washer forcing the cable to pass through it when it enters the box.

In this invention a box for connection of electricity cables which is fully waterproof because of its construction and has incorporated the glands is described.

The practical application of this box is given in the attached sketches.

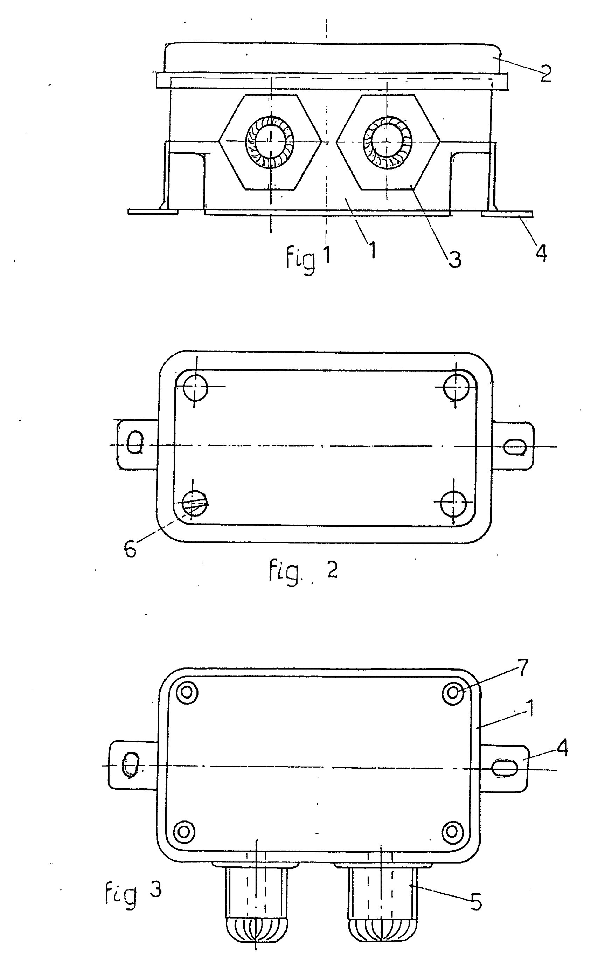

In figure 1 we note the frontage of the fully assembled box.

In figure 2 we see the top view of the box without the glands.

In figure 3 we see the top view of the internal of the box with the incorporated glands.

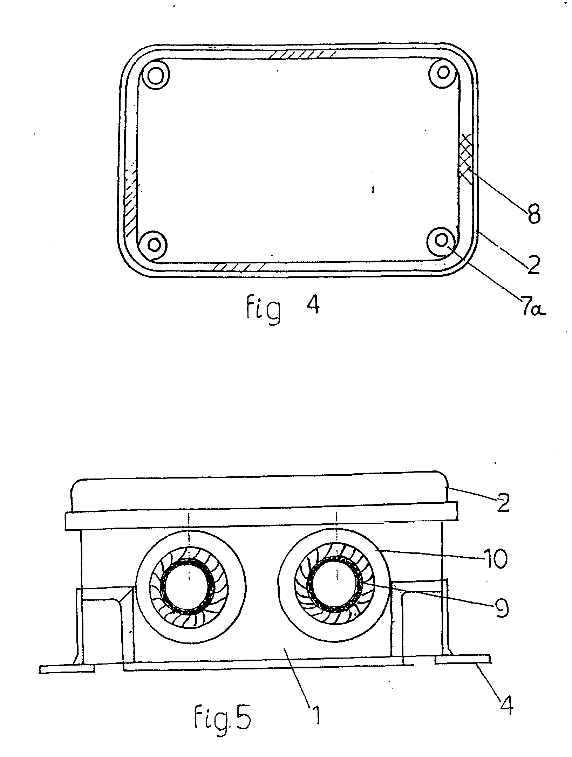

In figure 4 we note the top view of the cover with the waterproof flange.

In figure 5 we see the frontage of the box with the glands without their nuts.

Concerning the sketches the waterproof box includes its main body -1- the cover -2- the nuts of the glands -3- the holding bases -4-, the body of the glands -5-, the assembling nuts -6-, the screw receptions -7-7a-, the elastic flange -8- placed around the cover for absolute waterproof ability, the external elastic waterproof washer -9- and, at the end, the external ring formation -10- for the enhancement of the waterproof ability.

The box is constructed in different geometrical designs based on this construction principles.

The construction material is plastic and any other available and proper material.

## Claims

1. A waterproof box for external use used for the connection of electrical cables and includes its main body -1- the cover -2- the nuts of the glands -3- the holding bases -4-, the body of the glands -5-, the assembling nuts -6-, the screw receptions -7-7a-, the elastic flange -8- placed around the cover for absolute waterproof ability, the external elastic waterproof washer -9- and, at the end, the external ring formation -10- for the enhancement of the waterproof ability.
The box is constructed in different geometrical designs based on this construction principles.
The construction material is plastic and any other available and proper material.
